# EUROPEAN PATENT SPECIFICATION

(11) **EP 3 121 036 B1**
(45) Date of publication and mention of the grant of the patent: **28.10.2020**
(21) Application number: 15178149.9
(22) Date of filing: 23.07.2015
(51) Int. Cl.: B60G 9/02

(54) **PNEUMATIC AXLE SUSPENSION FOR A REAR AXLE OF A VEHICLE**
PNEUMATISCHE ACHSENAUFHÄNGUNG FÜR EINE HINTERACHSE EINES FAHRZEUGS
SUSPENSION D'ESSIEU PNEUMATIQUE POUR UN ESSIEU ARRIÈRE DE VÉHICULE

(43) Date of publication of application: 25.01.2017
(73) Proprietor: IVECO MAGIRUS AG, 89079 Ulm (DE)
(72) Inventor: KONRAD, Christian, 89269 VOHRINGEN (DE); SCHAEDLE, Markus, 88299 LEUTKIRCH (DE); SCHNEIDER, Elias, 89231 NEU-ULM (DE); BREY, Heiko, 89171 ILLERKIRCHBERG (DE)
(74) Representative: Franzolin, Luigi

(56) References cited:
- EP-A1- 1 500 529
- EP-A2- 1 110 848
- WO-A1-2011/099981
- WO-A1-2012/060745

## Description

### TECHNICAL FIELD

The present invention concerns a pneumatic axle suspension for an axle of a vehicle, in particular a heavy goods vehicle, according to the preamble of claim 1.

### BACKGROUND OF THE INVENTION

Axle suspension systems for vehicles already exist in many different embodiments. Suspensions for heavy goods vehicles often comprise a combination of pneumatic and other mechanical suspension means for providing sufficient driving comfort. These suspension and dampening means are installed underneath a frame forming the chassis of the vehicle, under which the suspended axle is arranged in a traverse direction, i. e. perpendicular to the front-rear direction or driving direction of the vehicle. The suspension means combine the functions of shock absorption with a guidance function for guiding the axle movements in a predetermined manner.

A common pneumatic axle suspension, to which the present invention refers, comprises a pair of spring beams for supporting the axle, each of the spring beams being arranged beneath the vehicle frame and extending perpendicular to the axle. Two pairs of air bellows are arranged between the spring beams and the frame. Each one pair of air bellows is arranged at one side of the vehicle frame and comprises a front bellow and a rear bellow arranged in front of and behind the axle, respectively, to support the respective front or rear end of the spring beams at this side of the vehicle against the bottom of the frame. Additionally, a pair of hydraulic shock absorbers is arranged to support the spring beams with respect to the frame.

For guiding the axle during its up and down movement underneath the frame, a pair of front hangers is arranged, each front hanger extending downwardly from the frame in front of the axle. The lower ends of the front hangers are connected to the axle by longitudinal rods which extend generally in a horizontal direction between the respective front hanger and the spring beam, wherein the ends of these longitudinal rods are pivotable linked to the front hanger and the spring beam. In a vertical movement of the axle, the longitudinal rods performs a pivoting movement around its suspension bearing at the front hanger.

At its upper portion, the axle is suspended by a triangular rod, having the shape of an isosceles triangle. The legs of this triangle are formed of two upper rods connected to each other to form one part, extending between the axle and the frame and being pivotable linked to an upper center portion of the axle.

In many common pneumatic axle suspensions of the above kind, an additional stabilizer bar is arranged underneath the frame for guiding the axle. This stabilizer bar is generally U-shaped, comprising a traverse beam extending parallel to the axle and two legs extending from the ends of the traverse beam in a direction perpendicular to the axis. The stabilizer bar is received within pivot bearings so that it can perform a turning movement around the main axle of the traverse beam, wherein the legs perform a swiveling up and down movement.

In a construction known as the state of the art, the pivot bearings supporting the traverse beam are disposed at the rear side of the axle, i. e. opposite to the front hangers, on the height of the spring beams. In this position the suspension of the stabilizer bar does not obstruct any other mounting components in the respective space underneath the frame. However, there is a major disadvantage that this construction takes much space and restricts the ground clearance of the vehicle. Another disadvantage of this arrangement is that the stabilizer bars introduce high forces and torques into the spring beams to which they are mounted. Consequently, the spring beams must have a solid construction and consequently a high weight.

It is a common demand in vehicle constructions to reduce the overall weight of the vehicle, and so there is also a demand to reduce the costs of the axle suspensions and their weight. Another common requirement is a compact design of all components, which is still to be improved in the axle suspensions. The driving comfort should be further improved, in particular the transfer of vibrations from the axle to the driver's cabin should be decreased. At the same time, a harmonic tracking on the road surface profile is desired.

Examples of known suspension designs are discloses in documents WO2012060745 A1, EP1500529 A1, EP1110848 A2 or WO2011099981 A1.

Therefore the problem underlying the present invention is to improve the design of the pneumatic axle suspension as described above according to the state of the art, under the aspects of a more compact design, increase of ground clearance, weight reduction, cost reduction, and improvement of driving comfort.

### SUMMARY OF THE INVENTION

These objects are achieved by a pneumatic axle suspension according to the present invention and as claimed in the independent claim.

The dependent claims discloses particular embodiments of the pneumatic axle suspension according to the present invention.

With the stabilizer bar being arranged in the space above the axle directly under the frame or enclosed by the framework of the frame, the design of the pneumatic axle suspension according to the present invention is very compact. Moreover, the forces acting on the stabilizer bar can be better absorbed by the frame and the axle. For this reason the spring beam can have a lighter weight, leading to a cost reduction. It has turned out that this design further increases the driving comfort by a decreased transfer of vibrations from the axle to other parts of the vehicle, and the road tracking of the axle has also improved. Because of the new position of the stabilizer bar, the ground clearance at the rear portion of the vehicle has been increased.

Thanks to the cranked shape of the stabilizer bar, it is provided more room for central parts of the axle, in particular the differential gear. Such bulky axle parts can obstruct the movement of the stabilizer bar. However, by the cranked shape this problem can be solved.

### BRIEF DESCRIPTION OF THE DRAWINGS

These and other features and advantages of the present invention will become apparent and elucidated from the followed description of preferred embodiments of the invention, which will be described hereinafter.
- Fig. 1 is a side view of an embodiment of the pneumatic axle suspension according to the present invention;
- Fig. 2 is a perspective view of the embodiment of the pneumatic axle suspension shown in Fig. 1, with the frame being omitted;
- Fig. 3 is a top view of the embodiment of the pneumatic axle suspension of Fig. 1; and
- Fig. 4 and 5 are enlarged detail views of parts of the pneumatic axle suspension shown in the foregoing figures.

### DETAILED DESCRIPTION OF THE INVENTION

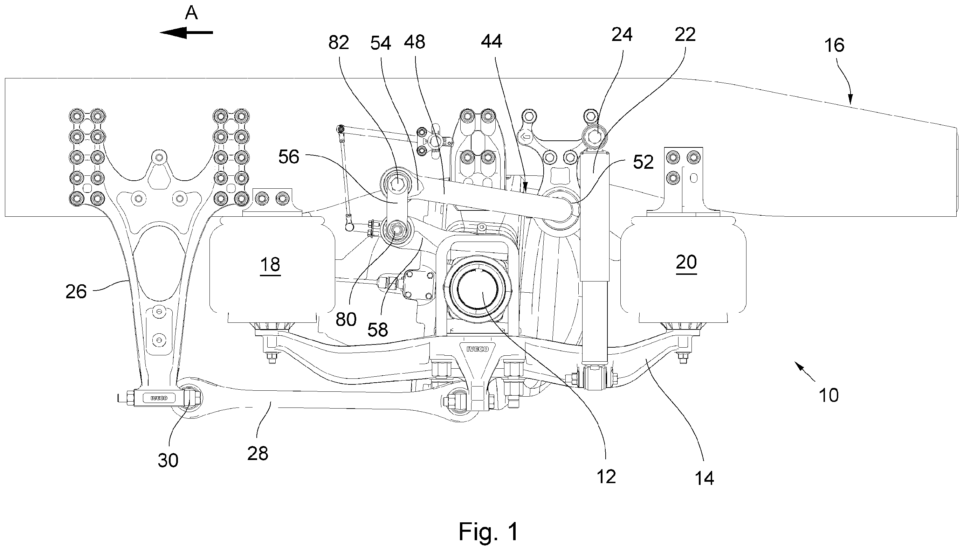

Fig. 1 shows a pneumatic axle suspension 10 for a rear axle 12 of a vehicle, which is only shown in parts. The driving direction in Fig. 1 is the left direction (indicated by an arrow A), and the axle 12 extends perpendicular to the plane of the drawing, i. e. perpendicular to the driving direction A. In the following, the terms "front", "rear", "left", "right", etc. refer to the indicated driving direction A.

The pneumatic axle suspension 10 comprises a pair of spring beams, wherein only the left spring beam 14 of this pair is visible in Fig. 1. This left spring beam 14 is mounted underneath the left portion of the axle 12 and extends perpendicular to the axle 12, namely parallel to the driving direction A. The other spring beam (not visible in Fig. 1) is arranged parallel to this spring beam 14. Both the pair of spring beams 14 and the axle 12 are arranged underneath a frame 16 of the vehicle, which is part of the chassis.

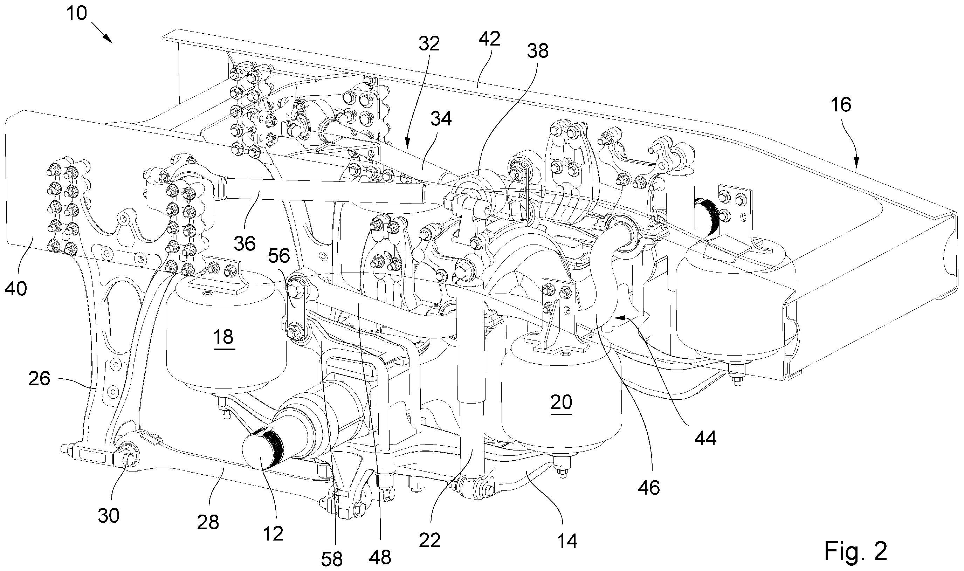

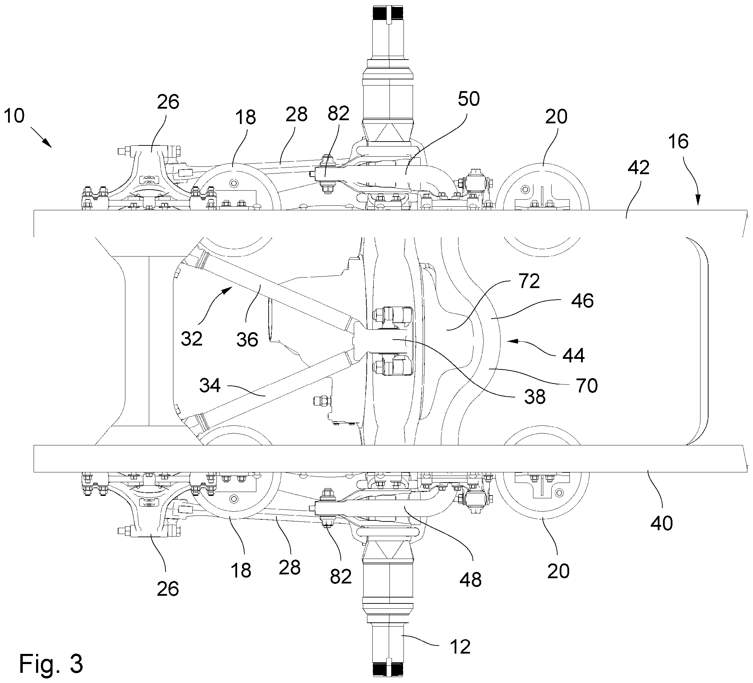

One pair of air bellows 18,20 is arranged directly under the left portion of the frame 16 between the bottom of the frame 16 and the front and rear ends of the spring beam 14, so that the spring beam 14 is suspended and cushioned by the air bellows 18,20 to absorb shocks and vibrations acting from the road via the axle to the vehicle body. A corresponding pair of bellows (not shown) is arranged in the same way as the air bellows 18,20 between the other spring beam 14 and the bottom of the right portion of the frame 16, so that the pneumatic axle suspension 10 comprises four air bellows in total (see also Fig. 2 and 3).

Moreover, a pair of hydraulic shock absorbers 22 is arranged to support the spring beams 14 with respect to the frame 16. Only one of these shock absorbers 22 is visible in Fig. 1 at the left side of the frame 16. The lower end of this shock absorber 22 is mounted to a portion of the left spring beam 14 extending rearward from the axle 12 towards the rear air bellow 20, and the upper end of this shock absorber 22 is attached laterally to the frame 16. The shock absorber 22 can perform a swiveling movement around its upper attachment bearing 24 in a perpendicular plane extending in the driving direction A. As usual, the hydraulic shock absorber 22 can be linearly extracted or retracted to change its length, i. e. the distance between the spring beam 14 and the frame 16.

In front of the axle 12, a pair of front hangers 26 is mounted to the bottom of the frame 16 extending downwardly from the frame 16. The left front hanger 26 is visible in Fig. 1. At its lower end, a longitudinal rod 28 extends in a generally horizontal direction between the front hanger 26 and the center portion of the left spring beam 14 directly under the axle 12. The longitudinal rod 28 is pivotable linked with its respective ends to the front hanger 26 and the spring beam 14, respectively. When the spring beam 14 performs a movement in the vertical direction to follow an unevenness of the road, which is cushioned by the pair air bellows 18,20 and the shock absorber 22, the longitudinal rod 28 performs a swiveling movement in a vertical plane extending in the driving direction A around its attachment bearing 30 at the lower end of the front hanger 26.

As visible in Fig. 2 and 3, a triangular rod 32 is disposed in a central space within the frame 16 above the axle 12 and having the shape of an isosceles triangle. The legs of this triangular rod 32 is formed by two upper rods 34,36 being connected to each other to form one piece, enclosing an acute angle. They extend from a common joint 38 in the driving direction A, with their ends being linked to the frame 16 in a position at which the front hangers 26 are mounted. That is, each of the upper rods 34,36 extends to run of the left and right beams 40,42 of the frame 16 extending in the driving direction A parallel to each other, and is attached to the inner side of this beam 40,42.

The common joint 38 is a hinge bearing that allows a common pivoting movement of the rod arrangement 32 including the two upper rods 34,36 around a horizontal axis, to follow the vertical movement of the axle 12 within the pneumatic axle suspension 10. At their front attachment points, the upper rods 34,36 are also attached to the respective beam 40,42 of the frame 16 by hinge bearings.

A stabilizer bar 44 is disposed above the axle 12. This stabilizer bar 44 is generally U-shaped and comprises a traverse beam (see Fig. 3) 46, which extends perpendicular to the driving direction A and generally parallel to the axle 12, and two parallel legs 48,50 which extend from the respective ends of the traverse beam 46 in the driving direction A. While the traverse beam 46 is disposed behind the axle 12 and in front of the rear air bellows 20, the two legs 48,50 extend across the upper portion of the axle 12, with their ends being located in front of the axle 12. The traverse bar 46 is rotatable supported by pivot bearings 52 so that it can be turned within the respective pivot bearings 52 around a horizontal axle parallel to the axle 12. In this turning movement, the legs 48,50 perform a swiveling movement in a vertical plane perpendicular to the axle 12.

The ends 54 of the legs 48,50 are each pivotable linked on the axle 12 via generally perpendicular thrust rods 56 and axle brackets 58 mounted on top of the axle 12. In this arrangement, an upper end of the respective thrust rod 56 is pivotable linked to one end 54 of the respective legs 48,50, and its lower end is linked to the axle brackets 58 respectively, as shown in Fig. 1.

More precisely, the respective axle brackets 58 comprises an extension portion 60 that extends generally in the driving direction A, i. e. to the front portion of the vehicle and in the same direction as the two legs 48,50 of the stabilizer bar 44. A hinge bearing 80 links the lower end of the thrust rod 56 to the front end of the extension portion 60, and another hinge bearing 82 links the upper end of the thrust rod 56 to the end 54 of one of the legs 48,50. In this arrangement, the thrust rod 56 can perform a pivot movement with respect to the axle bracket 58, on one hand, and to the respective leg 48,50 of the stabilizer bar 44, on the other hand.

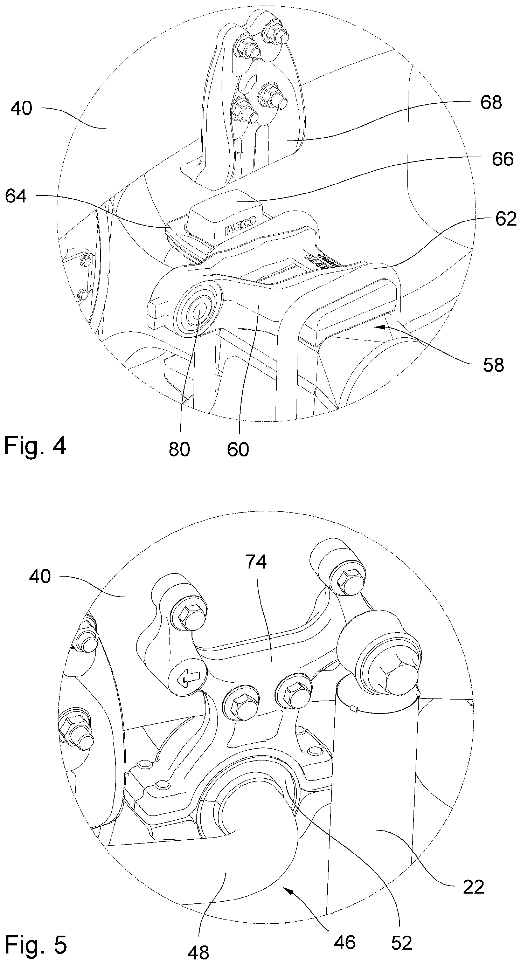

Details of the mounting of the axle bracket 58 can be taken from Fig. 4. The axle bracket 58 is mounted on top of the axle 12 by spring clamps 62 enclosing the axle brackets 58 and the axle 12 from the top, with their lower ends being fixed to the spring beams 14. One pair of spring clamps 62 is arranged to fix one axle bracket 58. At a lateral portion 64 of the respective axle bracket 58 standing inwardly, a rubber buffer 66 is clamped on top of the axle 12 by the axle bracket 58, forming a stopper. A free upper end of the rubber buffer is exposed through a recess within the lateral portion 64.

As a counterpart to this stopper 66, a upper stopper 68 is disposed at the bottom of the frame 16 in a position to contact the upper end of the rubber buffer as the stopper 66 when the axle 12 approaches the frame 16. This upper stopper 68 is provided as a frame bracket that abuts the rubber buffer 66 to limit the vertical movement of the axle 12 in the upper direction.

As can be taken in particular from Fig. 2 and 3, the traverse beam 46 of the stabilizer bar 44 has a cranked shape, with a U-shaped central portion 70 bending towards the rear portion of the vehicle. At the concave side of this section 70, the space for accommodating a differential gear 72 in the central section of the axle 12 is enlarged. By the cranked shape of the traverse beam 46, a collision of the stabilizer bar 44 with bulky portions of the axle 12 is avoided.

As can be taken from Fig. 5, the bearings 52 for supporting the traverse beam 46 are formed as half bearings mounted directly under the bottom of the respective bar 40,42 of the frame 16. The stabilizer bracket 74 for fixing this pivot bearing 52 to the frame 16 is also used for mounting the upper end of the hydraulic shock absorber 22 at the outer side of the bar 40.

When a pushing force acts on the axle 12 in the upward direction, for example, by a road bump or the like, the load of this force is taken by the air bellows 18,20 and the hydraulic shock absorber 22 so that they are compressed. At the same time, the axle brackets 58 on top of the axle 12 transmit the force onto the thrust rods 56 to which they are linked, and the thrust rods 56 in turn pivot the two legs 48,50 of the stabilizer bar 44 in a clockwise direction in Fig. 1, i. e. upwardly, while the traverse beam 46 is turned within its pivot bearings 52. In this movement, the two stoppers 66,68 (see Fig. 4) approach each other until they have contact, so that the way of the axle 12 in the upward direction is limited. The longitudinal rods 28 connected to the front hangers 26 have a guiding function in this movement, together with the triangular rod 32.

The arrangement of the stabilizer bar 44 and the thrust rods 56 and the axle brackets 58 is very compact and consumes little space above the axle 12. At the same time, ground clearance at the back portion of the vehicle behind the rear air bellows 20 is increased. In the present construction, the stabilizer bar 44 is lighter, increasing the overall weight of the vehicle and the manufacturing costs.

## Claims

1. Pneumatic axle suspension (10) for a rear axle (12) of a vehicle, in particular a heavy goods vehicle, comprising:
- a pair of spring beams (14) for supporting the axle (12), each of the spring beams being (14) arranged beneath a vehicle frame (16) and extending perpendicular to the axle (12),
- two pairs of air bellows (18,20), with each one pair being arranged at one side of the vehicle frame (16) and comprising a front bellow and a rear bellow arranged in front of and behind the axle (12), respectively, to support the respective front or rear end of the spring beams (14) at this side of the vehicle against the bottom of the frame (16),
- a pair of hydraulic shock absorbers (22), each shock absorber being arranged to support one of the spring beams (14) with respect to the frame (16),
- a pair of front hangers (26), each front hanger (26) extending downwardly from the frame in front of the axle (12),
- a pair of longitudinal rods (28), each longitudinal rod extending between one front hanger (26) and one spring beam (14) and being pivotable linked with its ends to the front hanger (26) and one spring beam (14), respectively,
- a stabilizer bar (44) which is generally U-shaped and disposed above the axle (12), with a traverse beam (46) and two legs (48,50) extending from the ends of the traverse beam (46) in a direction perpendicular to the axle (12),
said suspension system being **characterized by** comprising:
- a triangular rod (32) being pivotable linked to an upper center portion of the axle (12) and the frame (16), respectively,
and in that the traverse beam (46) is rotatable supported within pivot bearings (52) directly fixed to the bottom of the frame (16) behind said axle (12) such that the legs (48,50) can perform a swiveling movement, and the ends (54) of the legs (48,50) being pivotable linked to a front portion of the axle (12) via generally perpendicular thrust rods (56) and axle brackets (58) mounted on top of the axle (12), with each thrust rod (56) being pivotable hinged to one leg end (54) and to one axle bracket (58), respectively.

2. Pneumatic axle suspension according to claim 1, **characterized by** a pair of first stoppers (68) disposed at the bottom of the frame (16), with each stopper (68) disposed above one axle bracket (58), and second stoppers (66) mounted at the axle brackets (58) in a position to contact the first stoppers (68) when the axle (12) approaches the frame (16).

3. Pneumatic axle suspension according to one of claim 1 or 2, **characterized in that** the traverse beam (46) of the stabilizer bar (44) has a cranked shape.

4. Pneumatic axle suspension according to one of the preceding claims, **characterized in that** the axle brackets (58) each comprise an extension portion (60) extending from the top of the axle (12) in a direction generally parallel to the legs (48,50) of the traverse beam (46), with its end being hinged to the lower end of the respective thrust rod (56).

5. Pneumatic axle suspension according to one of the preceding claims, **characterized in that** the axle brackets (58) are mounted on top of the axle (12) by spring clamps (62) enclosing the axle brackets (58) and the axle (12) from the top and being fixed to the spring beams (14).

6. Pneumatic axle suspension according to one of the preceding claims, **characterized in that** the pivot bearings (52) supporting the traverse beam (46) are disposed within stabilizer brackets (74) mounted at the bottom of the frame (16), and the top ends of the shock absorbers (22) are pivotable mounted to the stabilizer brackets (74).

## Patentansprüche

1. Pneumatische Achsaufhängung (10) für eine Hinterachse (12) eines Fahrzeugs, insbesondere eines Schwerlastfahrzeugs, umfassend:
- ein Paar Federbalken (14) zur Stützung der Achse (12), wobei jeder der Federarme (14) unterhalb eines Fahrzeugrahmens (16) angeordnet ist und sich senkrecht zu der Achse (12) erstreckt,
- zwei Paar Luftbälge (18, 20), wobei jedes Paar auf einer Seite des Fahrzeugrahmens (16) angeordnet ist und einen vorderen Luftbalg und einen hinteren Luftbalg, jeweils angeordnet vor und hinter der Achse (12), umfasst, um das jeweilige Vorder- oder Hinterende der Federbalken (14) auf der Seite des Fahrzeugs gegen den Boden des Rahmens (16) abzustützen,
- ein Paar hydraulischer Stoßdämpfer (22), wobei jeder Stoßdämpfer angeordnet ist, um einen der Federbalken (14) in Bezug auf den Rahmen (16) abzustützen,
- ein Paar vorderer Aufhängungen (26), wobei sich jede vordere Aufhängung (26) vom Rahmen aus vor der Achse (12) nach unten erstreckt,
- zwei Längsstäbe (28), wobei jeder Längsstab sich zwischen einer vorderen Aufhängung (26) und einem Federbalken (14) erstreckt und schwenkbar mit seinem jeweiligen Ende an die vordere Aufhängung (26) und einen Federbalken (14) angelenkt ist,
- einen Stabilisator (44), der im Wesentlichen U-förmig und über der Achse (12) angeordnet ist, mit einem Querbalken (46) und zwei Beinen (48, 50), die sich von den Enden des Querbalkens (46) in einer Richtung senkrecht zur Achse (12) erstrecken,
wobei das Aufhängungssystem **dadurch gekennzeichnet ist, dass** es umfasst:
- einen dreieckigen Stab (32), der jeweils schwenkbar an einen oberen Mittelabschnitt der Achse (12) und den Rahmen (16) angelenkt ist,
wobei der Querbalken (46) drehbar in Drehlagern (52) gelagert ist, die hinter der Achse (12) unmittelbar am Boden des Rahmens (16) befestigt sind, sodass die Beine (48, 50) eine Schwenkbewegung ausführen können, und die Enden (54) der Beine (48, 50) drehbar an einen vorderen Abschnitt der Achse (12) über im Wesentlichen senkrechte Schubstangen (56) und Achsklammern (58) angelenkt sind, die auf der Oberseite der Achse (12) befestigt sind, wobei jede Schubstange (56) jeweils drehbar an ein Beinende (54) und eine Achsklammer (58) angelenkt ist.

2. Pneumatische Achsaufhängung nach Anspruch 1, **gekennzeichnet durch** ein Paar erster Stopper (68), die an dem Boden des Rahmens (16) angeordnet sind, wobei jeder Stopper (68) über einer Achsklammer (58) angeordnet ist, und zweite Stopper (66) an den Achsklammern (58) in einer Position befestigt sind, um die ersten Stopper (68) zu kontaktieren, wenn sich die Achse (12) dem Rahmen (16) nähert.

3. Pneumatische Achsaufhängung nach einem der Ansprüche 1 oder 2, **dadurch gekennzeichnet, dass** der Querbalken (46) des Stabilisators (44) eine gekröpfte Form hat.

4. Pneumatische Achsaufhängung nach einem der vorstehenden Ansprüche, **dadurch gekennzeichnet, dass** die Achsklammern (58) jeweils einen Verlängerungsabschnitt (60) umfassen, der sich von der Oberseite der Achse (12) in eine Richtung im Wesentlichen parallel zu den Beinen (48, 50) des Querbalkens (46) erstreckt, wobei sein Ende an das untere Ende der jeweiligen Schubstange (56) angelenkt ist.

5. Pneumatische Achsaufhängung nach einem der vorstehenden Ansprüche, **dadurch gekennzeichnet, dass** die Achsklammern (58) auf der Oberseite der Achse (12) durch Federklammern (62) befestigt werden, welche die Achsklammern (58) und die Achse (12) von der Oberseite aus umschließen und an den Federbalken (14) befestigt sind.

6. Pneumatische Achsaufhängung nach einem der vorstehenden Ansprüche, **dadurch gekennzeichnet, dass** die Drehlager (52), welche den Querbalken (46) lagern, in Stabilisatorklammern (74) angeordnet sind, die an dem Boden des Rahmens (16) befestigt sind, und dass die oberen Enden der Stoßdämpfer (22) drehbar an den Stabilisatorklammern (74) befestigt sind.

## Revendications

1. Suspension d'essieu pneumatique (10) pour un essieu arrière (12) d'un véhicule, en particulier pour un véhicule utilitaire du type poids-lourds, comprenant :
- une paire de ressorts à lames (14) pour supporter l'essieu (12), chacun des ressorts à lames (14) étant agencé au-dessous d'un châssis de véhicule (16) et s'étendant perpendiculairement à l'essieu (12) ;
- deux paires de soufflets pneumatiques (18, 20), chaque paire étant agencée au niveau d'un côté du châssis de véhicule (16) et comprenant un soufflet avant et un soufflet arrière qui sont respectivement agencés à l'avant de l'essieu (12) et derrière celui-ci, pour supporter l'extrémité avant ou arrière respective des ressorts à lames (14) au niveau de ce côté du véhicule contre le fond du châssis (16) ;
- une paire d'absorbeurs de chocs hydrauliques (22), chaque absorbeur de chocs étant agencé de manière à ce qu'il supporte l'un des ressorts à lames (14) par rapport au châssis (16) ;
- une paire de mains de ressort avant (26), chaque main de ressort avant (26) s'étendant vers le bas depuis le châssis à l'avant de l'essieu (12) ;
- une paire de tiges longitudinales (28), chaque tige longitudinale s'étendant entre une main de ressort avant (26) et un ressort à lames (14) et pouvant être liée de façon pivotante au moyen de ses extrémités à la main de ressort avant (26) et à un ressort à lames (14), de façon respective ;
- une barre stabilisatrice (44) qui présente une forme générale d'un U et qui est disposée au-dessus de l'essieu (12), avec un profilé transversal (46) et deux bras (48, 50) qui s'étendent depuis les extrémités du profilé transversal (46) dans une direction qui est perpendiculaire à l'essieu (12) ;
ledit système de suspension étant **caractérisé en ce qu'**il comprend :
- une tige triangulaire (32) qui est liée de façon pivotante à une partie centrale supérieure de l'essieu (12) et au châssis (16), de façon respective ; et **en ce que** :
le profilé transversal (46) est supporté à rotation à l'intérieur de paliers de pivotement (52) qui sont directement fixés sur le fond du châssis (16) derrière ledit essieu (12) de telle sorte que les bras (48, 50) puissent réaliser un mouvement de pivotement, et les extrémités (54) des bras (48, 50) étant liées de façon pivotante à une partie avant de l'essieu (12) via des tiges de poussée généralement perpendiculaires (56) et des supports d'essieu (58) qui sont montés sur le sommet de l'essieu (12), chaque tige de poussée (56) étant reliée par charnière de façon pivotante à une extrémité de bras (54) et à un support d'essieu (58), de façon respective.

2. Suspension d'essieu pneumatique selon la revendication 1, **caractérisée par** une paire de premiers moyens d'arrêt (68) qui sont disposés au niveau du fond du châssis (16), chaque moyen d'arrêt (68) étant disposé au-dessus d'un support d'essieu (58), et par des seconds moyens d'arrêt (66) qui sont montés au niveau des supports d'essieu (58) en une position qui permet leur mise en contact avec les premiers moyens d'arrêt (68) lorsque l'essieu (12) s'approche du châssis (16).

3. Suspension d'essieu pneumatique selon l'une des revendications 1 ou 2, **caractérisée en ce que** le profilé transversal (46) de la barre stabilisatrice (44) présente une forme contre-coudée.

4. Suspension d'essieu pneumatique selon l'une des revendications précédentes, **caractérisée en ce que** les supports d'essieu (58) comprennent chacun une partie d'extension (60) qui s'étend depuis le sommet de l'essieu (12) dans une direction qui est de façon générale parallèle aux bras (48, 50) du profilé transversal (46), son extrémité étant reliée par charnière à l'extrémité inférieure de la tige de poussée respective (56).

5. Suspension d'essieu pneumatique selon l'une des revendications précédentes, **caractérisée en ce que** les supports d'essieu (58) sont montés sur le sommet de l'essieu (12) au moyen de pinces à ressort (62) qui renferment les supports d'essieu (58) et l'essieu (12) depuis le sommet et qui sont fixées sur les ressorts à lames (14).

6. Suspension d'essieu pneumatique selon l'une des revendications précédentes, **caractérisée en ce que** les paliers de pivotement (52) qui supportent le profilé transversal (46) sont disposés à l'intérieur de supports stabilisateurs (74) qui sont montés au niveau du fond du châssis (16), et les extrémités de sommet des absorbeurs de choc (22) sont montées de façon pivotante sur les supports stabilisateurs (74).
